# EUROPÄISCHE PATENTSCHRIFT

(11) **EP 3 114 472 B1**
(45) Veröffentlichungstag und Bekanntmachung des Hinweises auf die Patenterteilung: **28.08.2024**
(21) Anmeldenummer: 15708150.6
(22) Anmeldetag: 25.02.2015
(51) Int. Cl.: G01N 29/04, G01N 29/44, G01N 29/30, G01N 29/265, G01N 29/26, G01N 29/11

(54) **SYSTEM UND VERFAHREN ZUR ZERSTÖRUNGSFREIEN PRÜFUNG VON METALLSCHMELZSCHWEISSVERBINDUNGEN AN DÜNNWANDIGEN ROHREN**
SYSTEM AND METHOD FOR NON-DESTRUCTIVE TESTING OF MELT-WELDED JOINTS ON THIN-WALLED TUBES
SYSTÈME ET PROCÉDÉ DE CONTRÔLE NON DESTRUCTIF DE RACCORDS SOUDÉS PAR FUSION DE MÉTAL SUR DES TUBES À PAROIS MINCES

(30) Priorität: 03.03.2014 EP 14157473
(43) Veröffentlichungstag der Anmeldung: 11.01.2017
(73) Patentinhaber: Fraunhofer-Gesellschaft zur Förderung der angewandten Forschung e.V., 80686 München (DE); Ing.-Büro Prüfdienst Uhlemann, 03185 Peitz (DE)
(72) Erfinder: UHLEMANN, Frank, 03054 Cottbus (DE); HILLMANN, Susanne, 01465 Langebrück (DE); SCHILLER-BECHERT, David M., 01159 Dresden (DE); BOR, Zsolt, 01099 Dresden (DE)
(74) Vertreter: Pfenning, Meinig & Partner mbB
(86) Internationale Anmeldenummer: PCT/EP2015/053867
(87) Internationale Veröffentlichungsnummer: WO 2015/132100

(56) Entgegenhaltungen:
- WO-A1-2010/097269
- WO-A2-2008/075943
- CN-A- 1 138 699
- CN-A- 1 223 374

## Beschreibung

### Metallschmelzschweißverbindungen an dünnwandigen Rohren

Die Erfindung betrifft ein Verfahren zur zerstörungsfreien Prüfung von Metallschmelzschweißverbindungen an dünnwandigen Rohren. Dabei ist ein Einsatz bei der Prüfung von Rohren mit Nennwanddicken bis maximal 6 mm vorgesehen.

Die Prüfung von Rohrrund-Schmelzschweißverbindungen an Rohren mit einer Nennwanddicke kleiner 6mm mit halbautomatisierter phasengesteuerter Array-Technologie mit Schallwellen ist sehr problematisch in der Durchführung und Bewertung und ist auch deshalb von der Norm "DIN EN ISO 13588, ZfP von Schweißverbindungen-Ultraschallprüfung- Anwendung von automatisierter phasengesteuerter Array-Technologie" nicht abgedeckt.

Die Schwierigkeiten bei der Prüfung entstehen dabei auch durch eine erhebliche Defokussierung des eingesetzten Schallbündels durch die gekrümmten Rohrwände. Bisher war deshalb eine sichere Fehlerauffindung und Bewertung von Schweißverbindungen an solchen Rohren unter Einsatz von Ultraschalltechnik nicht möglich.

Eine Prüfung solcher Rohr- und-Schmelzschweißverbindungen wurde bisher ausschließlich mittels Radiografie-Prüfung durchgeführt. Dabei ist ein erheblicher Aufwand erforderlich und insbesondere bei eng begrenzten räumlichen Gegebenheiten war ein Einsatz nicht oder nur schwer möglich.

So sind aus CN 1 223 374 A, CN 1 138 699 A und WO 2008/075943 akustische Verfahren zur Prüfung von Schweißnähten unter Nutzung von Kalibrierkörpern, in denen Bohrungen ausgebildet sind, bekannt.

WO 2010/097269 A1 betrifft den Einsatz von Phased-Array-Systemen bei der Schweißnahtprüfung.

Es ist daher Aufgabe der Erfindung, Möglichkeiten für eine zerstörungsfreie Prüfung an dünnwandigen Rohren mit einer Wanddicke von kleiner als 6mm mit Ultraschalltechnik anzugeben, die auch bei diesen kleinen Nennwanddicken eine ausreichende Prüfgenauigkeit erreichen.

Ein wichtiger Vorteil der Ultraschallprüfung ist es, dass damit vermehrt die wirklich kritischen Fehler in den Schweißnähten gefunden werden können. Schweißnahtfehler mit Kerbwirkung, wie z.B. Risse, Bindefehler und ungenügende Durchschweißung können bei der Radiographie-Prüfung nur bedingt detektiert werden.

Erfindungsgemäß wird diese Aufgabe mit einem Verfahren, das die Merkmale des Anspruchs 1 aufweist, gelöst.

Bei dem erfindungsgemäßen System ist mindestens einem Prüfkopf zur Emission und Detektion von Schallwellen sowie mindestens ein Justierkörper, der aus einem Werkstoff, der der gleiche oder ein Werkstoff mit zumindest annähernd gleichen akustischen Eigenschaften ist, wie das jeweilige zu prüfende dünnwandige Rohr vorhanden. Die Abmaße und die Durchmesser des Justierkörpers sind gleich zu denen des jeweiligen zu prüfenden Rohres. Außerdem sind im Justierkörper mehrere Sacklochbohrungen mit jeweils unterschiedli cher Länge/Tiefe ausgehend von ihrer Öffnung bis zu ihrem Boden ausgebildet.

Dementsprechend sind für verschiedene Rohrgeometrien und teils auch Rohrwerkstoffe jeweils entsprechende Justierkörper erforderlich.

Die Sacklochbohrungen im Justierkörper sollten dabei so ausgerichtet sein, dass die mittlere Längsachse der Sacklochbohrungen im gleichen Winkel α, wie die Flächen der Rohre die miteinander verschweißt worden sind, ausgerichtet ist. Üblicherweise werden Schweißverbindungen an dünnwandigen Rohren als V-Schweißnaht ausgebildet. Dementsprechend sind die miteinander zu verschweißenden Stirnflächen der beiden miteinander zu verschweißenden Rohre vor dem Verschweißen in einem Winkel abgeschrägt worden. In diesen Fällen sollte die mittlere Längsachse der Sacklochbohrungen in einem Winkel ausgerichtet sein, der der Komplementärwinkel zu 90 °ist, in dem die zu verschweißenden Stirnflächen der Rohrenden ausgerichtet sind. Die mittlere Längsachse der Sacklochbohrungen ist also in einem Winkel α in Bezug zur Oberfläche des Justierkörpers, von der Schallwellen in den Justierkörper eingekoppelt werden, ausgerichtet, und Schallwellen werden dann mit dem gleichen Winkel α in den Justierkörper eingekoppelt.

Als Prüfkopf können verschiedene Ultraschallprüfköpfe eingesetzt werden. Im einfachsten Fall kann dies ein Prüfkopf als ein einzelner Ultraschallwandler sein, mit dem Schallwellen emittiert und detektiert werden können. Er sollte in jedem Fall für eine Laufzeiterfassung der Schallwellen ausgebildet sein, wie dies bei den bei der Erfindung einsetzbaren Prüfköpfen üblich ist.

Bei einem solchen einfachen Prüfkopf ist es jedoch günstig, den Einfallswinkel von emittierten Schallwellen auf eine Schweißnaht und auf den Boden von Sacklöchern bei einer Justierung verändern zu können.

Für die Durchführung der Prüfung werden an sich bekannte Phased-Array-Sensoren eingesetzt, die die Prüfung vereinfachen und die dafür erforderliche Zeit deutlich verkürzen können. Phased-Array-Sensoren verfügen über eine Mehrzahl von Elementen, mit denen Schallwellen emittiert und detektiert werden können. Häufig sind diese Elemente in einer Reihen- und/oder Spaltenanordnung an einem solchen Sensor vorhanden. Durch entsprechende Ansteuerung der Elemente werden Schallwellen mit unterschiedlichen und sich dabei auch noch verändernden Winkeln und ggf. auch zu verschiedenen Zeiten emittiert.

Schallwellen emittierende und detektierende Elemente eines Phased Array-Sensors werden in mehreren Gruppen und dabei die einzelnen Gruppen jeweils einzeln unabhängig voneinander betrieben. Auch so können Schallwellen an verschiedenen Positionen in den Werkstoff eines zu prüfenden Rohres oder einen Justierkörper eingekoppelt und dabei auch der Einfallswinkel der Schallwellen verändert werden, was einer Schwenkbewegung zumindest sehr nahekommt. Dementsprechend treffen die zurück reflektierten Schallwellen auch aus sich verändernder Richtung mit entsprechenden Winkeln zu ihrer Detektion auf Elemente des Phased-Array-Sensors auf.

Dabei kann ein Fehler/Defekt als ein Überschreiten oder Unterschreiten eines vorgebbaren Schwellwertes erkannt und angezeigt werden. Dabei können die einzelnen Messsignale unter Nutzung von Blenden, Schwellen, Vergleichslinien, Tiefen-Ausgleichskurven oder ähnlichen Tools korrigiert werden, worauf nachfolgend noch zurückzukommen sein wird.

Bei dem erfindungsgemäßen Verfahren wird eine Prüfung eines Rohres und eine Justierung mit mindestens einem Prüfkopf durchgeführt. Mit dem Prüfkopf werden Schallwellen an mehreren Positionen und mit unterschiedlichen Winkeln von der Oberfläche des jeweiligen zu prüfenden Rohres und der Oberfläche des Justierkörpers eingekoppelt. Dabei werden die Schallwellen auf die Schweißnaht des Rohres und bei der Justierung auf Böden von Sacklochbohrungen gerichtet. Die zurück reflektierten Schallwellen werden mit dem Prüfkopf detektiert und mit der/den erfassten Messsignalamplitude(n) wird ein Vergleich auf Über- oder Unterschreiten eines vorgebbaren Schwellwertes zur Erkennung eines Fehlers/Defektes durchgeführt.

Vorteilhaft ist es, mittels der bekannten Ausbildung und Position der Böden der Sacklochbohrungen Tiefen-Ausgleichskurven zu bestimmen, mit denen eine Kompensation der Dämpfung bei unterschiedlich langen Wegen, die Schallwellen im Werkstoff des Rohres zurücklegen, erfolgt, durch eine entsprechende, schallwegabhängige Verstärkung von Messsignalen, die mit Schallwellen detektiert worden sind.

Schallwellen emittierende und detektierende Elemente eines Phased-Array-Sensors sollen in mindestens zwei Gruppen zusammengefasst sein, und die Gruppen zeitlich unabhängig voneinander betrieben werden. Dabei können von einer Gruppe Schallwellen emittiert und dann die im Werkstoff eines Rohres oder Justierkörpers reflektierten Schallwellen detektiert werden, während eine oder mehrere andere Gruppe(n) inaktiv ist/sind.

Ein wesentlicher Bestandteil des Systems ist mindestens ein Justierkörper, der individuell für die jeweilige Prüfaufgabe angefertigt werden muss. Er dient der Empfindlichkeitsjustierung des Prüfsystems.

Ein Justierkörper wird aus einem Werkstoff, der der gleiche oder ein Werkstoff mit zumindest annähernd gleichen akustischen Eigenschaften, wie das jeweilige zu prüfende Rohr gebildet und mit zumindest den weitestgehend gleichen Abmaßen, wie Außendurchmesser und Nennwanddicke hergestellt. Im Werkstoff des Justierkörpers sind mehrere Sacklochbohrungen mit jeweils unterschiedlicher Länge und Tiefe, ausgehend von der Öffnung der Sacklochbohrungen bis zu deren Boden, ausgebildet. Besonders bevorzugt sind Flachbodenbohrungen, bei denen die Bodenfläche senkrecht zu den Innenwänden der Sacklochbohrung ausgerichtet und als ebene Fläche ausgebildet ist.

Der Justierkörper sollte mindestens so lang sein, dass die Flachbodenbohrungen mit genügend Abstand zum Boden oder der Wand des den Justierkörper bildenden Körpers oder Rohrendes eingebracht werden können, und der Schallwellen emittierende und detektierende Prüfkopf parallel zur mittleren Längsachse des Justierkörpers so verschoben werden kann, dass alle Sacklochbohrungen mindestens auch noch nach 3 Umlenkungen/Reflektionen an einer Wand des Justierkörpers angeschallt werden können.

Die Sacklochbohrungen sollten von einer Seite aus in einem Winkel, der der Nahtvorbereitung angepasst ist, eingebracht werden. Die mittlere Längsachse der Sacklochbohrungen sollte daher in einem Winkel ausgerichtet sein, der dem Komplementärwinkel zu 90 ° des Winkels in dem die miteinander verschweißten Flächen/Kanten der zu einem Rohr verschweißten Rohrenden entspricht.

Die Mitte des Bohrungsbodens sollte bei Nutzung von drei Sacklochbohrungen in einem Justierkörper in unterschiedlichen Tiefen des zu prüfenden Rohres angeordnet sein. Hier sind zum Beispiel Tiefen von ¼, ½ und ¾ der Nennwanddicke des jeweils zu prüfenden Rohres günstig. Tiefe, Durchmesser und der Neigungswinkel der Sacklochbohrungen sollten in engen, festgelegten Toleranzen von Sollwerten gehalten sein.

Alternativ zu den Flachbodenbohrungen können auch Sacklochbohrungen mit halbsphärischem Boden in einem Justierkörper ausgebildet werden. Diese müssen bei gleicher Messempfindlichkeit wesentlich größer im Durchmesser sein, als Flachbodenbohrungen. Deshalb können sie nur bei großen Wanddicken eingesetzt werden und müssen ob ihrer in Bezug zu Flachbodenbohrungen unterschiedlichen Empfindlichkeit gesondert validiert werden.

Bei Sacklochbohrungen mit halbsphärischem Boden sollte nicht der Mittelpunkt der Halbsphäre, sondern der tiefste Punkt in entsprechender Tiefe im Werkstoff des Justierkörpers angeordnet sein. Bei Verwendung von beispielsweise drei solchen Sacklochbohrungen sollte dann der tiefste Punkt bei ¼, ½ und ¾ der Nennwanddicke des jeweils zu prüfenden Rohres angeordnet sein. Außerdem sollte sichergestellt sein, dass die Halbsphären vollständig ausgeprägt sind, und von der Außenwand des Justierkörpers einen ausreichend großen Abstand aufweisen.

Ein Justierkörper ist speziell für die jeweilige Anwendung herzustellen und dient der Überprüfung des Gesamtsystems auf Funktionsfähigkeit und zur Justierung der Empfindlichkeit in regelmäßigen Abständen.

Justierkörper sollen aus einem dünnwandigen Rohr mit dem gleichen Werkstoff oder einem Werkstoff mit vergleichbaren akustischen Eigenschaften und gleichen Abmaßen mit Außendurchmesser und Wanddicke hergestellt werden, wie das jeweilige zu prüfende Rohr.

Die Länge des Rohres , das den Justierkörper bildet, sollte mindestens so groß sein, dass die vollständige Prüfkopfhalterung und ggf. deren Führung daran angebracht werden können.

Als zusätzlicher Kontrollreflektor kann mindestens eine senkrecht durch eine Rohrwand verlaufende Bohrung, mit festgelegtem Durchmesser eingebracht sein und damit ein Kontrollkörper für das erfindungsgemäße System zur Verfügung gestellt werden. Diese Bohrungen sollte(n) möglichst mittig an dem Kontrollkörper bildenden Rohr angeordnet sein und die Umfangsposition, zur Positionierung des Prüfkopfhalters gekennzeichnet sein.

Für die Prüfung sollte eine maximale, möglichst redundante Schallfeldabdeckung der gesamten Schweißnaht eingehalten sein. Bei Einsatz eines Phased-Array-Senors als Prüfkopf reicht ein einzelner Sektorschwenk zur maximalen Fehlerauffindung meist nicht aus. Phased Array-Sensoren ermöglichen es, räumlich versetzte, von einander unabhängige Sektor- Scans mit sich verändernden Winkeln der emittierten Schallwellen mit einem Prüfkopf durch zu führen. Für die Prüfung einer Schweißnaht können die einzelnen Ultraschallwellen emittierenden und detektierenden Elemente eines Phased-Array-Sensors in mindestens zwei Gruppen, die räumlich voneinander getrennt sind, eingeteilt und getrennt voneinander betrieben werden. So können bei einem Phased-Array-Sensor mit 32 Elementen, diese Elemente in zwei Gruppen geteilt werden, wobei die erste Gruppe die Elemente 1-16 und die zweite Gruppe die Elemente 17-32 umfasst.

Diese Gruppen können bei der Prüfung an einem dünnwandiges Rohr oder einem Justierkörper so betrieben werden, dass sie einen Sektorschwenk vollziehen, der mindestens den Winkelbereich von 90° minus dem Winkel der Neigung der jeweilige Fläche(n) der Nahtvorbereitung für die Schweißnahtverbindung +/-10° in 1° Schritten, also dem Winkel in dem auch die miteinander verschweißten Rohre an den jeweiligen Stirnflächen abgeschrägt sind, abdeckt.

Dadurch kann jeder Punkt der Schweißnaht mit den von den zwei Gruppen der Elemente emittierten Schallwellen gescannt und somit von mindestens zwei unterschiedlichen Winkeln getroffen werden. Die Teilung der Elemente eines Phased-Array-Sensors in mehrere Gruppen führt dazu, dass mehrere Schalleintrittspunkte genutzt werden können, ohne den Prüfkopf dabei axial zu verschieben, wodurch der interessierende Bereich der zu prüfenden Schweißnaht mehrfach ausgehend von unterschiedlichen Positionen und mit unterschiedlichen Winkeln des Schallbündels getroffen wird, und so die Überdeckung an der bestrahlten Schweißnaht erhöht werden kann, was zu einer Verbesserung der Prüfgenauigkeit führt.

Bei einigen Anwendungsfällen kann es vorteilhaft sein, zusätzlich mit zwei Prüfköpfen zur Emission und Detektion von Schallwellen im TOFD-Modus (Time-of-Flight-Diffraction) zu arbeiten. Dadurch können Beugungssignale von Ungänzen im Rohrwerkstoff oder einer Schweißnaht detektiert werden. Die Prüfkörper können die gleichen sein, wie sie bei einer Phased Array-Anordnung eingesetzt werden können. Diese können dann zusätzlich auch im TOFD-Modus betrieben werden.

Bei der Durchführung des Verfahrens zur Prüfung und auch bei der Justierung mit einem Justierkörper sollte eine Überprüfung der Kopplung der Schallwellen in das zu prüfende Rohr bzw. den Justierkörper durchgeführt werden. Zur Ankoppelkontrolle kann eine zusätzliche Gruppe von Elementen eines Phased-Array-Sensors genutzt werden. Beispielsweise können alle Elemente eines Prüfkopfes genutzt und mit ihnen Schallwellen senkrecht zur Oberfläche des Rohres oder Justierkörpers emittiert werden. Zur Erkennung einer mangelhaften Ankopplung kann ein Rückwandmesssignal (von einer gegenüberliegenden Wand des Rohres reflektierte Schallwellen) ausgewählt werden, das von anderen Messsignalen leicht differenzierbar ist. Dieses Messsignal kann auf 80% der Bildschirmhöhe und eine Registrierschwelle von 40% Bildschirmhöhe eingestellt werden. Sobald das Messsignal unter diesen Schwellwert sinkt, wird dies registriert und als unzureichende Ankopplung für die eingesetzten Schallwellen gewertet. Im letztgenannten Fall ist eine Überprüfung des eingesetzten Koppelmediums oder dessen Zuführung erforderlich. Sowohl bei der Prüfung, wie auch bei der Justierung sollte ein Koppelmedium eingesetzt werden.

Nach einer standardmäßigen Justierung von Schallgeschwindigkeit und Entfernung kann die Justierung der Messempfindlichkeit durchgeführt werden. Erfindungsgemäß wird am jeweiligen Justierkörper für jede Gruppe und jeden Winkel eine Tiefenausgleichs-Kurve erstellt. Durch Verschieben des Prüfkopfes können die Böden der Sacklochbohrungen nacheinander mit jedem Winkel des Schallbündels, das von den Elementen eines Prüfkopfes emittiert wird, angeschallt werden. Die Böden der Sacklochbohrungen können dabei mit verschiedenen Schallwegen aufgenommen werden, also beispielsweise nach einer Reflektion des Schallbündels an einer Rohrwand und auch nach 2 Reflektionen des Schallbündels an einer Rohrwand. Mit drei Sacklochbohrungen kann in der Regel der gesamte Schallwegbereich für die Prüfung an dünnwandigen Rohren mit der genannten kleinen Nennwanddicke abgedeckt werden. Mittels einer Tiefenausgleichs-Kurve können die unterschiedlich langen Wege, die Schallwellen innerhalb des zu prüfenden Rohres ausgehend vom Eintritt in den Rohrwerkstoff bis zum Austreten und dem Auftreffen auf Elemente eines Prüfkopfes zu deren Detektion zurück legen und die dadurch hervorgerufene unterschiedliche Dämpfung der Messsignale kompensiert werden, indem Messsignalwerte von Schallwellen, die einen größeren Weg zurück gelegt haben und daher stärker gedämpft worden sind, entsprechend verstärkt oder eine entsprechende Messwerterhöhung durchgeführt werden.

Durch die so ermittelte Tiefenausgleichs-Kurve wird ein erkannter Fehler an einer Schweißnaht, unabhängig von seiner Tiefenlage und dem ihn treffenden Winkel immer mit derselben Messsignalhöhe angezeigt. Bei diesem Verfahren kann eine Tiefenausgleichs-Kurve für jeden Winkel des Sektorschwenks hinterlegt und bei einer realen Prüfung berücksichtigt werden. Dadurch kann eine Echohöhenbewertung und somit eine wiederholbare und nachvollziehbare Bewertung von Fehlern oder Defekten an einer Schweißnaht erreicht werden.

Eine optimale Fehlerauffindung kann bei Schweißnähten dadurch erreicht werden, dass das emittierte Schallwellenbündel senkrecht auf die Schweißnahtflanke trifft, da üblicherweise gerade an der Schweißnahtflanke Bindefehler entstehen können. Zusätzlich sollten dabei alle Positionen der Schweißnaht in mindestens vier unterschiedlichen Winkeln abgetastet/bestrahlt werden. Dadurch kann eine ausreichende Redundanz erreicht werden.

Wenn das einzusetzende Prüfsystem es technisch zulässt, sollte die Schweißnahtform und Mittellinie am Gerät eingestellt werden.

Für eine präzise Positionierung der Prüfköpfe in Bezug zur Schweißnaht kann eine Vorrichtung/Prüfkopfhalterung eingesetzt werden, die einen gleichbleibenden Abstand der Prüfköpfe zur Schweißnaht, wie auch zueinander, sowie eine gleichmäßige Ankopplung gewährleistet und über einen Wegsensor verfügt.

Bei Verwendung von mehreren Prüfköpfen in einer Prüfkopfhalterung kann zur Kontrolle der optimalen und gleichmäßigen Einstellung und Ankopplung der Prüfköpfe sowie der symmetrischen Ausrichtung des Prüfkopfsystems an der Schweißnaht der Kontrollkörper gemäß Anspruch 8 eingesetzt werden. Hierbei wird die senkrechte Bohrung von allen Prüfköpfen angeschallt, und sowohl Messsignalamplitude als auch Schallwege (Laufzeit) müssen bei den symmetrisch angeordneten Prüfköpfen in engen Grenzen gleich groß sein. Diese Prüfung sollte in regelmäßigen Abständen wiederholt werden, um zu gewährleisten, dass die Prüfung fehlerfrei über einen längeren Zeitraum durch geführt werden kann.

Für die Prüfung wird die Vorrichtung/Prüfkopf-Halterung so am zu prüfenden Rohr befestigt, dass die Schweißnaht exakt mittig zwischen den beiden Prüfköpfen angeordnet ist und der Abstand der Prüfköpfe zur Schweißnahtmitte einem vorgegebenen Wert entspricht.

Es ist darauf zu achten, dass genügend Koppelmedium zwischen den aufeinander zu weisenden Oberflächen des zu prüfenden Rohres bzw. des Justierkörpers und dem/den Prüfkopf/-köpfen vorhanden ist. Selbstverständlich sollte das gleiche Koppelmedium für die Justierung und die Prüfung eingesetzt werden, um die Vergleichbarkeit zu gewährleisten.

Bei der Prüfung kann die Vorrichtung/Prüfkopf-Halterung oder ein einzelner Prüfkopf um 360° um das zu prüfende Rohr herum oder entlang der gesamten Länge einer Schweißnaht bewegt werden. Danach kann das mittels der erfassten Messsignale erstellte Bild eingefroren und die Ankoppelung des einen oder beider Prüfköpfe an einem erstellten C-Bild kontrolliert werden. Wenn die Ankoppelkontrolle eine ordnungsgemäße Ankopplung über den gesamten Scan anzeigt, können die Daten, die A-Bilder zu jedem Punkt des C-Bildes enthalten müssen, abgespeichert und ausgewertet werden.

Eine Schallweglängen unabhängige Bewertung ist mit Hilfe der Tiefenausgleichs-Kurven möglich, die mit Hilfe der Sacklochbohrungen an dem jeweiligen Justierkörper ermittelt worden sind. Alternativ können zur Bewertung auch andere Tools, wie Vergleichslinien oder feste Schwellwerte verwendet werden. Bei der Vergleichslinienmethode wird an einem Vergleichskörper eine Vergleichslinie aufgenommen und eine Echohöhenbewertung durchgeführt. Die Vergleichslinie wird zur Bewertung der Messsignale verwendet. Als Vergleichsreflektoren können z.B. Querbohrungen, Durchgangsbohrungen, Flachbodenbohrungen, Kanten, Nuten, Rückwände, halbshpärisch Bohrungen etc. verwendet werden.

Feste Schwellwerte sind Schallwegsbereichs-abhängige Blenden, die auf eine definierte Echohöhe festgelegt sind.

Sollte die Empfindlichkeit der Justierung nicht ausreichen oder zu groß für die Prüfung sein, kann ein Verstärkungs-Auf- oder Abschlag der Messsignale festgelegt werden.

Durch die Justierung an einem für einen speziellen Rohrtyp spezifischen Justierkörper können Fehler/Defekte mit gleichen Reflektionseigenschaften in unterschiedlicher Tiefenlage dennoch gleich angezeigt oder bewertet werden. Es kann mit einer einfachen Blende oder einem einzigen Schwellwert als Registrier- bzw. Zulässigkeitsgrenze gearbeitet werden.

Zur Bewertung von Fehlern/Defekten kann die Größe der Messsignalamplituden und die Tiefenlage, die aus den A-Bildern entnommen werden können, die Tiefenausdehnung, die aus dem Sektorbild entnommen werden kann sowie eine Ausdehnung in Umfangsrichtung, die aus dem C-Bild entnommen werden kann, herangezogen werden.

Die Bewertung der anzeigten Messergebnisse kann innerhalb der Schweißnahtgeometrie erfolgen. Dazu kann eine Anzeige der Schweißnahtgeometrie im Sektorbild des Ultraschallmesssignales genutzt werden. Außerdem ist eine sehr gute Justierung der Positionierung der Vorrichtung/Prüfkopf-Halterung zur Schweißnahtmitte in engen Toleranzen förderlich.

Mit dem erfindungsgemäßen Verfahren können Längsfehler (längliche Fehler/Defekte, die in Achsrichtung des Rohres liegen) besonders gut detektiert werden.

Durch die Erfindung kann die üblicherweise eingesetzte Röntgenprüfung vollständig durch die Ultraschallprüfung ersetzt werden. Dadurch kann eine Vermeidung von unnötiger Strahlenbelastung für Mensch und der Umwelt erreicht werden. Durch die Vereinfachung des Prüfverfahrens bei gleichzeitig ausreichender Detektionsgenauigkeit kann eine Einsparung von Personalkosten im Vergleich zur Röntgen-Prüfung erreicht und die Revisions- und Störungszeiten von Anlagen, z.B. in Kraftwerken können erheblich verkürzt werden. Auch die Prüfzeiträume sind besser planbar. Die eingesetzte Technik ist kostengünstiger als bei einem Röntgenequipment.

Die Erfindung kann besonders vorteilhaft für die Prüfung entsprechender Rohre in Kraftwerken, petrochemischen Anlagenbau, o.ä . eingesetzt werden.

Nachfolgend soll die Erfindung anhand von Beispielen näher erläutert werden. In den verschiedenen Beispielen genutzte und gezeigte Merkmale sollen unabhängig vom jeweiligen Beispiel miteinander kombiniert genutzt werden können.

Dabei zeigen:
Figur 1 drei schematische Schnittdarstellungen durch einen Justierkörper mit jeweils einer Sacklochbohrung und eine Seitenansicht;
Figur 2 einen Ausschnitt einer Schnittdarstellung eines Justierkörpers mit einer Flachbodenbohrung;
Figur 3 in einer Schnittdarstellung schematisch die Winkelzuordnung Prüfkopf-Einschallwinkel, Flanke Nahtvorbereitung Scheißnaht, und Lage Justierreflektor und
Figur 4 ein Beispiel eines Kontrollkörpers mit Durchgangsbohrung.

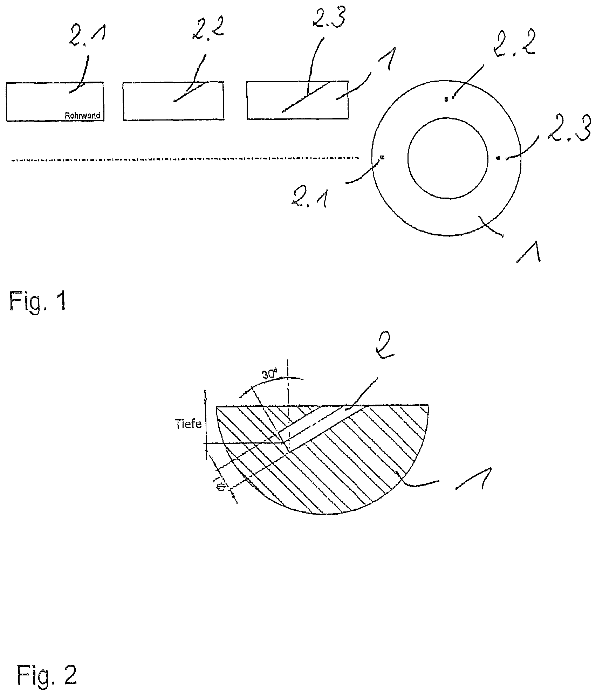

Mit den drei in Figur 1 gezeigten Schnittdarstellungen eines Justierkörpers 1 ist deutlich erkennbar, das hier zum Beispiel an einem rohrförmigen Justierkörper 1 in der Rohrwand drei Sacklochbohrungen 2.1, 2.2 und 2.3 über den Umfang des Rohres verteilt ausgebildet sind. Die Sacklochbohrung 2.1 ist in diesem Beispiel die kürzeste und weist eine Länge/Tiefe auf, die ¼ der Nennwanddicke eines zu prüfenden Rohres für das der Justierkörper 1 ausgebildet ist, aufweist. Die Sacklochbohrung 2.2 weist eine Länge/Tiefe, die ½ der Nennwanddicke und die Sacklochbohrung 2.3 weist eine Länge/Tiefe, die ¾ der Nennwanddicke entspricht auf. Die Böden der Sacklochbohrungen sind also mit unterschiedlichen Abständen zur Oberfläche des Justierkörpers 1 angeordnet, auf den mindestens ein nicht dargestellter Prüfkopf auf die Oberfläche an der die Öffnungen der Sacklochbohrungen 2.1, 2.2 und 2.3 aufsetzbar ist.

Der Justierkörper 1 ist aus dem gleichen Werkstoff, wie ein zu prüfendes Rohr hergestellt. Er weist auch die gleiche Wanddicke und den gleichen Außendurchmesser auf, wie dieses zu prüfende Rohr.

Mit dem in Figur 2 gezeigten Ausschnitt ist erkennbar, wie eine Sacklochbohrung 2 als Flachbodenbohrung im Werkstoff eines Justierkörpers 1 in einem Winkel von 60 ° zur Oberfläche geneigt ausgebildet ist. Die mittlere Längsachse der Sacklochbohrung 2 ist als Strich-Punkt-Linie eingezeichnet. Dementsprechend ist in Abbildung 2 der Boden der Sacklochbohrung 2 in einem Winkel von 30 ° in Bezug zur Oberfläche des Justierkörpers 1 geneigt. Dieser Winkel entspricht dem Winkel mit dem die Flächen der Rohre, die miteinander verschweißt worden sind, bei der Schweißnahtvorbereitung, abgeschrägt worden sind.

Bei der Justierung werden die vom Boden der Sacklochbohrung 2 zurück reflektierten Schallwellen genutzt.

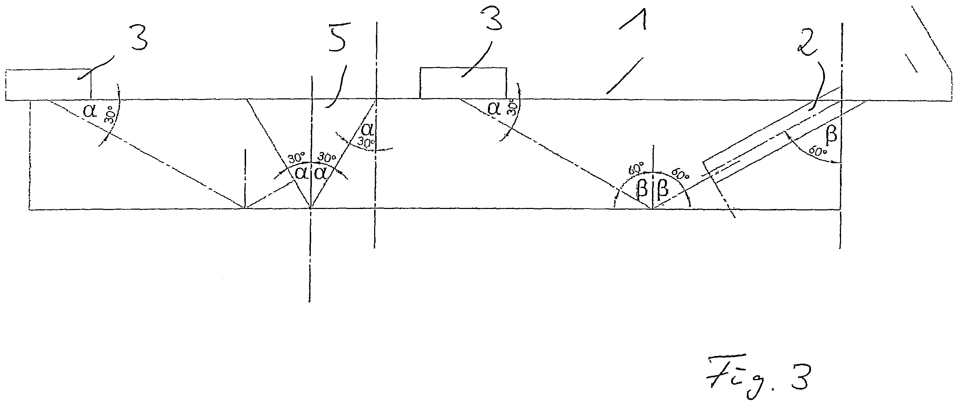

Zur Prüfung von Rundnähten an Rohren mit einem Außendurchmesser von 31,8 mm und einer Wanddicke von 4,0 mm und dem Werkstoff X wird ein Justierkörper 1 aus dem gleichen Werkstoff und mit den gleichen Abmessungen (Außendurchmesser und Wanddicke) benötigt. Auch der Kontrollkörper 4 sollte diese Eigenschaften aufweisen. Unter der Annahme, dass die Schweißnahtflanken vor dem Verschweißen der Rohrenden, die mit einander verschweißt sind, unter dem Winkel α = 30° (siehe Figur 3) vorbereitet wurden, sollten in den Justierkörper 1 Sacklochbohrungen 2.1, 2.2, 2.3 mit einem Flachboden eingebracht werden, die entsprechend Figur 3 mit einem Winkel von β = 60° eingebracht worden sind. Hier ist es empfehlenswert, drei Bohrungen mit dem Boden in drei unterschiedlichen Tiefen in der Rohrwand des Justierkörpers 1, z.B. in den Tiefen 1mm, 2mm und 3 mm einzubringen. Empfehlenswert ist ein Durchmesser des Flachbodens von 1 mm. Als Kontrollreflektor wird eine senkrechte Bohrung 4.1 an einer weit entfernten Stelle von den Flachbodenbohrungen oder in einem zusätzlichen Rohr als Kontrollkörper 4 eingebracht, die einen Durchmesser von 1mm hat. In der Figur 3 ist außerdem eine Schweißnaht 5, die nicht am Justierkörper 1, sondern am zu prüfenden Rohr ausgebildet ist, dargestellt. Dabei sind die miteinander verschweißten Teile/Flächen bei der Nahtvorbereitung mit einem Winkel α von hier 30 °in Bezug zu einer senkrecht durch die Wand des Rohres eingezeichneten Bezugslinie oder in einem Winkel β von 60 ° in Bezug zur Rohroberfläche geneigt ausgebildet worden.

Zur Prüfung werden 2 Phased-Array-Prüfköpfe 3 eingesetzt, die jeweils 32 Elemente besitzen. Diese werden jeweils in 3 Gruppen unterteilt:
- Gruppe 1: Sektorschwenk zwischen 50° und 70° (in 1°-Schritten) mit den Elementen 1-16
- Gruppe 2: Sektorschwenk zwischen 50° und 70° (in 1°-Schritten) mit den Elementen 17-32
- Gruppe 3: Linear 0° mit den Elementen 1-32

Mit diesen beiden Prüfköpfen 3 und den oben genannten Einstellungen werden die drei Flachbodenbohrungen im Justierkörper 1 von Hand angeschallt, die Empfindlichkeit aufgezeichnet und somit eine Tiefen-Ausgleichskurve aufgenommen. Dann werden die Prüfköpfe 3 in die Prüfkopfhalterung eingebaut, die auf den Außendurchmesser von 31,8 mm angepasst ist. Der Abstand zwischen den Prüfköpfen 3 wird definiert eingestellt und die Kontrolle des Prüfsystems an der senkrechten Bohrung des Kontrollkörpers 4 vorgenommen. Hier muss die Echohöhe (Amplitude des Messignals) der Bohrung 4.1 mit den vergleichbaren Gruppen beider Prüfköpfe 3 nahezu gleich groß sein genauso wie der angezeigte Schallweg. Danach wird die Prüfkopfhalterung um die zu prüfende Schweißnaht herum gelegt und mittig ausgerichtet. Die Prüfköpfe 3 werden mit der Halterung einmal langsam 360° um das Rohr herumgeführt und eine Aufzeichnung der Daten dabei vorgenommen. Wenn die Ankoppelkontrolle (jeweils Gruppe 3 des Prüfkopfes) durchgängig keine Anzeigen liefert, wird die Aufzeichnung gespeichert und kann später zu einem beliebigen Zeitpunkt ausgewertet werden.

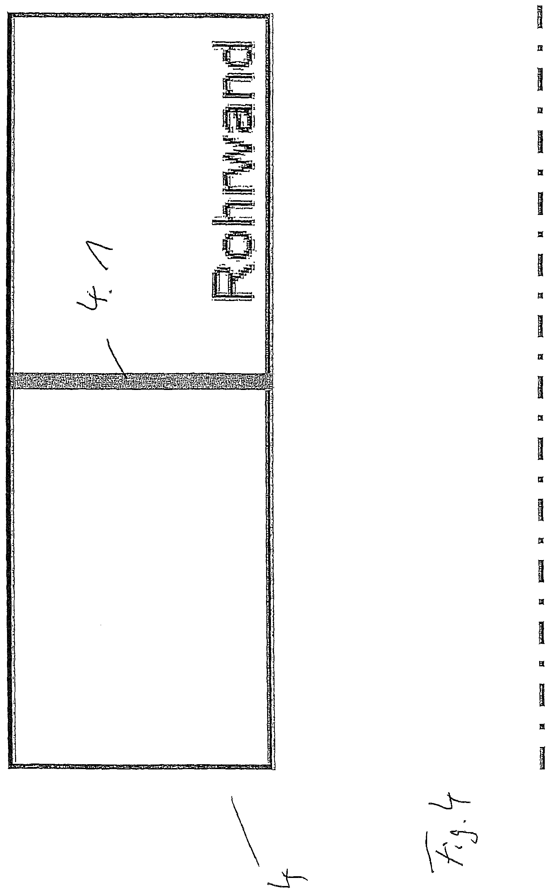

Ein Kontrollkörper 4 mit einer senkrecht zur Oberfläche ausgebildeten Bohrung 4.1 ist in Figur 4 gezeigt.

## Patentansprüche

1. Verfahren zur zerstörungsfreien Prüfung von Metallschmelzschweißverbindungen an dünnwandigen Rohren mit einer maximalen Wanddicke von 6 mm, wobei das Verfahren folgende Schritte aufweist:
Einsetzen eines Prüfsystems mit mindesten einem Prüfkopf und mindestens einem Justierkörper, der aus einem Werkstoff, der der gleiche oder ein Werkstoff mit zumindest annähernd gleichen akustischen Eigenschaften ist und dessen Abmaße und die Durchmesser/Dicken zumindest annähernd gleich zu den des jeweiligen zu prüfenden Rohres sind, wobei
im Justierkörper mehrere Sacklochbohrungen mit jeweils unterschiedlicher Länge/Tiefe ausgehend von ihrer Öffnung bis zu ihrem Boden ausgebildet sind, wobei
die Sacklochbohrungen in einem Winkel α in Bezug zur Oberfläche des Justierkörpers (1) ausgerichtet sind, und Schallwellen mit dem gleichen Winkel α in den Justierkörper (1) eingekoppelt werden,
Durchführung einer Prüfung eines Rohres und einer Justierung mit dem mindestens einen Prüfkopf (3),
wobei der Prüfkopf (3) ein Phased-Array-Sensor ist, dessen Schallwellen emittierende und detektierende Elemente in mehreren Gruppen und dabei die einzelnen Gruppen jeweils einzeln unabhängig voneinander betrieben werden, so dass Schallwellen an mehreren Positionen und mit unterschiedlichen Winkeln von der Oberfläche des jeweiligen zu prüfenden Rohres und der Oberfläche des Justierkörpers (1) eingekoppelt und dabei auf die Schweißnaht des Rohres und bei der Justierung auf Böden von Sacklochbohrungen (2.1, 2.2, 2.3) gerichtet werden und
die zurück reflektierten Schallwellen mit diesem oder einem anderen Prüfkopf (3) detektiert und mit der/den erfassten Messsignalamplitude(n) ein Vergleich auf Über- oder Unterschreiten eines vorgebbaren Schwellwertes zur Erkennung eines Fehlers/Defektes durchgeführt wird und
am jeweiligen Justierkörper (1) für jede Gruppe und jeden Winkel eine Tiefenausgleichskurve erstellt wird, so dass ein erkannter Fehler unabhängig von seiner Tiefenlage und dem ihn betreffenden Winkel immer mit derselben Messsignalhöhe angezeigt wird.

2. Verfahren nach Anspruch 1, **dadurch gekennzeichnet, dass** mittels der bekannten Ausbildung und Position der Böden der Sacklochbohrungen (2.1, 2.2, 2.3) Tiefen-Ausgleichskurven bestimmt werden, mit denen eine Kompensation der Dämpfung bei unterschiedlich langen Wegen, die Schallwellen im Werkstoff des dünnwandigen Rohres zurück legen, durch eine Verstärkung von Messsignalen, die mit Schallwellen detektiert worden sind, die einen längeren Weg zurück legen mussten als andere im Inneren reflektierte Schallwellen, die insbesondere nahe der Oberfläche von der die Schallwellen eingekoppelt worden sind, erreicht wird.

3. Verfahren nach einem der Ansprüche 1 bis 2, **dadurch gekennzeichnet, dass** bei der Justierung Schallwellen auf die Oberfläche der Böden von Sacklochbohrungen (2.1, 2.2, 2.3) gerichtet und von dort reflektierte Schallwellen detektiert werden.

4. Verfahren nach einem der vorhergehenden Ansprüche, **dadurch gekennzeichnet, dass** ein zusätzlicher Kontrollkörper (4) eingesetzt wird, in dem eine Durchgangsbohrung (4.1) senkrecht zu einer Oberfläche, von der Schallwellen eingekoppelt werden, ausgebildet ist und der Kontrollkörper (3) aus einem Werkstoff, der der gleiche oder ein Werkstoff mit zumindest annähernd gleichen akustischen Eigenschaften ist, wie das jeweilige zu prüfende dünnwandige Rohr gebildet ist, Bestandteil des System ist oder
eine senkrecht zur Oberfläche des Justierkörpers (1) ausgebildete Durchgangsbohrung zusätzlich im Justierkörper (1) ausgebildet ist.

## Claims

1. Method for the non-destructive testing of metal fusion welds on thin-walled pipes with a maximum wall thickness of 6 mm, wherein the method comprises the following steps:
using a testing system having at least one test probe and at least one adjustment body which is made from a material which is the same or a material having at least approximately the same acoustic properties, and whose dimensions and the diameters/thicknesses of which are at least approximately the same as those of the respective pipe to be tested, wherein
a plurality of blind holes are formed in the adjustment body, each with a different length/depth starting from their opening to their base, wherein
the blind holes are aligned at an angle α relative to the surface of the adjustment body (1), and sound waves are coupled into the adjustment body (1) at the same angle α, carrying out testing of a pipe and adjusting with the at least one test probe (3),
wherein the test probe (3) is a phased array sensor whose elements emitting and detecting sound waves are operated in a plurality of groups and the individual groups are each operated individually independently of one another so that sound waves are coupled in at several positions and at different angles from the surface of the respective pipe to be tested and the surface of the adjustment body (1) and are thereby directed towards the welding seam of the pipe and during adjustment to the bottoms of blind holes (2.1, 2.2, 2.3), and
the reflected sound waves are detected by this or another test probe (3) and a comparison is made with the recorded measurement signal amplitude(s) to determine whether a predeterminable threshold value has been exceeded or not reached in order to detect a fault/defect, and
a depth compensation curve is created for each group and each angle on the respective adjustment body (1) so that a detected defect is always displayed with the same measurement signal level regardless of its depth position and the angle affecting it.

2. Method according to claim 1, **characterized in that** depth compensation curves are determined by means of the known formation and position of the bottoms of the blind holes (2.1, 2.2, 2.3), with which compensation of the attenuation in the case of paths of different lengths that sound waves cover in the material of the thin-walled pipe is achieved by an amplification of measurement signals which have been detected by sound waves which had to cover a longer path than other sound waves reflected in the interior, in particular near the surface from which the sound waves have been coupled in.

3. Method according to one of claims 1 to 2, **characterized in that**, during the adjustment, sound waves are directed onto the surface of the bottoms of blind holes (2.1, 2.2, 2.3) and sound waves reflected from there are detected.

4. Method according to one of the preceding claims, **characterized in that** an additional control body (4) is used, in which a through-hole (4.1) is formed perpendicular to a surface from which sound waves are coupled in, and the control body (3) is formed from a material which is the same or a material with at least approximately the same acoustic properties as the respective thin-walled pipe to be tested, is a component of the system or
a through-hole formed perpendicular to the surface of the adjustment body (1) is additionally formed in the adjustment body (1).

## Revendications

1. Procédé de contrôle non destructif de soudures par fusion de métal sur des tubes à paroi mince d'une épaisseur de paroi maximale de 6 mm, le procédé comprenant les étapes suivantes consistant à :
utiliser un système de contrôle avec au moins une sonde et au moins un corps d'étalonnage, qui est en un matériau qui est le même ou un matériau présentant au moins approximativement les mêmes propriétés acoustiques, et dont les dimensions et les diamètres/épaisseurs sont au moins approximativement égaux à ceux du tuyau respectif à contrôler, dans lequel
plusieurs trous borgnes de longueur/profondeur différentes sont formés dans le corps d'étalonnage à partir de leur ouverture jusqu'à leur fond, dans lequel
les trous borgnes sont orientés selon un angle α par rapport à la surface du corps d'étalonnage (1) et des ondes acoustiques sont injectées avec le même angle α dans le corps d'étalonnage (1), effectuer un contrôle d'un tube et un étalonnage avec la au moins une sonde (3),
dans lequel la sonde (3) est un capteur en réseau phasé, dont les éléments émettant et détectant des ondes acoustiques sont en plusieurs groupes et ainsi les groupes individuels fonctionnent chacun individuellement indépendamment les uns des autres, de sorte que des ondes acoustiques sont injectée dans plusieurs positions et avec des angles différents par rapport la surface du tube respectif à contrôler et à la surface du corps d'étalonnage (1) et sont ainsi dirigées vers la soudure du tube et, lors de l'étalonnage, vers les fonds des trous borgnes (2.1, 2.2, 2.3), et
les ondes acoustiques réfléchies en retour sont détectées à l'aide de celle-ci ou d'une autre sonde (3) et une comparaison est effectuée avec la ou les amplitudes du ou des signaux de mesure détectés concernant un dépassement ou un non-dépassement d'une valeur seuil prédéfinissable pour la détection d'une erreur/d'un défaut, et
une courbe de compensation de profondeur est créée au niveau du corps d'étalonnage respectif (1) pour chaque groupe et chaque angle, de sorte qu'une erreur détectée est toujours affichée avec la même hauteur de signal de mesure, indépendamment de sa position de profondeur et de l'angle qui la concerne.

2. Procédé selon la revendication 1, **caractérisé en ce que** des courbes de compensation de profondeur sont déterminées au moyen de la configuration et de la position connues des fonds des trous borgnes (2.1, 2.2, 2.3), et permettent d'obtenir une compensation de l'atténuation pour des trajets de différentes longueurs, que des ondes acoustiques parcourent dans le matériau du tube à paroi mince, par une amplification de signaux de mesure qui ont été détectés avec des ondes acoustiques qui ont dû parcourir un trajet plus long que d'autres ondes acoustiques réfléchies à l'intérieur, qui ont été injectées en particulier à proximité de la surface de provenance des ondes acoustiques.

3. Procédé selon l'une quelconque des revendications 1 à 2, **caractérisé en ce que** lors de l'étalonnage, des ondes acoustiques sont dirigées sur la surface des fonds des trous borgnes (2.1, 2.2, 2.3) et des ondes acoustiques réfléchies à partir de ceux-ci sont détectées.

4. Procédé selon l'une quelconque des revendications précédentes, **caractérisé en ce qu'**un corps de contrôle supplémentaire (4) est utilisé, dans lequel un alésage traversant (4.1) est formé perpendiculairement à une surface à partir de laquelle des ondes acoustiques sont injectées, et le corps de contrôle (3) est formé en un matériau qui est le même ou un matériau présentant au moins approximativement les mêmes propriétés acoustiques que le tube à paroi mince respectif à contrôler, faisant partie du système, ou
un trou traversant perpendiculaire à la surface du corps d'étalonnage (1) est également formé dans le corps d'étalonnage (1).
